# EUROPEAN PATENT SPECIFICATION

(11) **EP 2 815 912 B1**
(45) Date of publication and mention of the grant of the patent: **01.03.2017**
(21) Application number: 13172773.7
(22) Date of filing: 19.06.2013
(51) Int. Cl.: B60K 15/04

(54) **ANTI-THEFT SYSTEM FOR FUEL TANKS OF COMBUSTION ENGINE VEHICLES**
DIEBSTAHLSICHERUNGSSYSTEM FÜR KRAFTSTOFFTANKS VON FAHRZEUGEN MIT VERBRENNUNGSMOTOR
SYSTÈME ANTIVOL POUR RÉSERVOIRS DE CARBURANT DE VÉHICULES À MOTEUR À COMBUSTION

(43) Date of publication of application: 24.12.2014
(73) Proprietor: IVECO S.p.A., 10156 Torino (IT)
(72) Inventor: Stokes, Jon, Buckinghamshire SL8 5TH (GB)
(74) Representative: Franzolin, Luigi

(56) References cited:
- EP-A1- 1 782 993
- EP-A1- 2 500 202
- CN-U- 201 626 301
- CN-U- 202 174 934
- US-A1- 2009 320 956
- US-A1- 2010 282 757

## Description

### Field of the invention

The present invention relates to an anti-theft system for fuel tanks of combustion engine vehicles.

### Description of the prior art

Combustion engine vehicle are usually provided with screw tops provided with key lock. This in order to prevent the screw top is removed in order to steal the fuel from the vehicle tank.

Some of such key lock can be open with special keys, other can be made harmless with a common battery drill, therefore, especially during the night or during the breaks at the fuel stations, the thieves have the time to remove the screw top, to insert a rubber tube and to suck the fuel from the vehicle tanks. This for example by exploiting the well known siphoning effect.

CN-201626301-U, which comprises the features mentioned in the preamble of claim 1, discloses an anti-theft filtering screen that can be clamped within a fuel refilling tube connected to a fuel tank. Clamping is obtained by means of flexible wings delimiting a clamping slot.

### Summary of the invention

Therefore, it is the main object of the present invention to provide an anti-theft device for fuel tanks of combustion engine vehicles which overcomes the above problems/drawbacks. The main principle of the invention is to insert a special device along the filler pipe, which prevent the introduction of a rubber tube, but, that, at the same time, permits the normal refueling procedure.

Such device is as a membrane provided with two or more through holes.

These and further objects are achieved by means of an apparatus as described in the attached claims, which form an integral part of the present description.

### Brief description of the drawings

The invention will become fully clear from the following detailed description, given by way of a mere exemplifying and non limiting example, to be read with reference to the attached drawing figures, wherein:
- Fig. 1 shows schematically an example of arrangement of the fuel tank in a combustion engine vehicle;
- Figs. 2 and 3 show respectively a front view and a side sectional view of the Anti-theft device according to the present invention.

The same reference numerals and letters in the figures designate the same or functionally equivalent parts.

### Detailed description of the preferred embodiments

According to the present invention the fuel anti-theft device D comprises a plate P provided with several through holes H, preferably circular, and having a shape complementary with the interior shape of a right section of a tank refilling pipe FP, RT, TN.

The anti-theft device, due to the function mechanism developed, will be called "membrane" in the following.

Usually, the tank refilling pipe comprises a first portion FP fixed with the vehicle coach, of rigid material, where the fuel pistol is inserted for refilling the tank T. The last portion TN is fixed with the tank, for example having the same material of the fuel tank and moulded together in one piece. Therefore, also the last portion is of rigid material. Between the first portion and last portion, usually there is at least a rubber joint RT, which connects such portions by defining one, continuous, fuel refilling pipe.

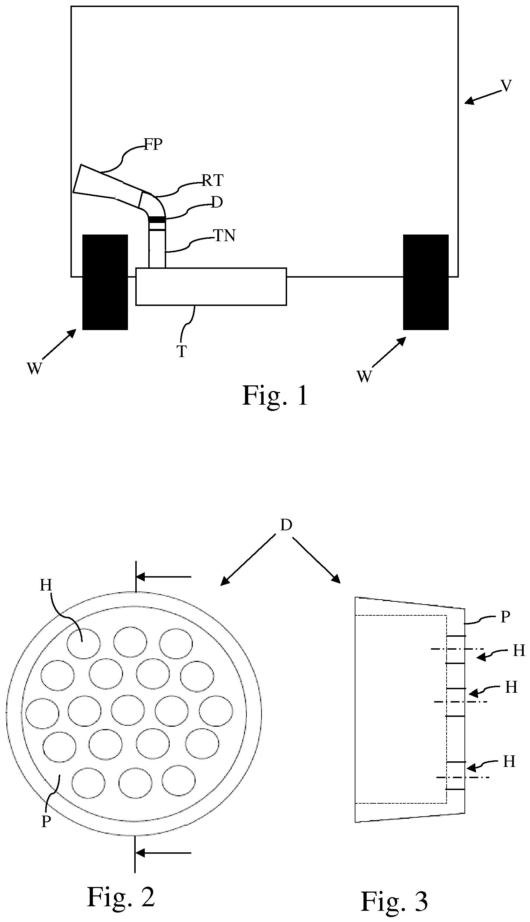

The figure 1 shows a schematic view of a vehicle V provided with wheels W, a fuel tank T and a fuel refilling pipe FP, RT, TN and the membrane D of the present invention.

According to a preferred embodiment of the present invention the membrane D is inserted into the rubber portion so as the plate P is perpendicular with the pipe axis.

In this way, the axis of the several hollows H is parallel with the fuel refilling pipe axis, in the pointing which the membrane is placed.

In particular, a preferred embodiment of the present invention exploits the coupling of the rubber joint and one of the rigid end pipes of the fuel refilling pipe for positioning in a stable way the membrane D.

For example, within the rubber joint could be present an inner circular rib, originally designed to operatively touch the circular mouth of the rigid end pips. Thus, the membrane can be advantageously interposed between such inner circular rib and the circular mouth of one of the rigid end pipes, in order to stably fix the membrane D within the fuel refilling pipe.

Figures 2 and 3 show a preferred embodiment of the present invention.

The membrane D, besides the plate P, has a cylindrical or truncated-conical hollow shape, by defining substantially a goblet with one bottom, namely the plate P, provided with the several holes H.

Such shape helps for a easier positioning of the membrane within the fuel refilling pipe, however it could have different shapes according to the cross-sectional shape of the fuel refilling pipe, and the inner elements, such us ribs, necks, etc., useful for stably disposing the membrane within the fuel refilling pipe.

The membrane could be made of PTFE or further suitably materials.

According to another embodiment of the present invention, the membrane can be produced in one piece with the tank T itself, for example at the mouth or along the refilling pipe portion TN made in one piece with the tank T.

The holes H can be have a diameter of about 6 mm that is small enough to prevent the insertion of a rubber tube in the fuel tank. Smaller size can be used, by increasing the number of holes, in order not to interfere with the fuel refilling operations.

## Claims

1. Anti-theft system for fuel tanks (T) of combustion engine vehicles (V), the tank (T) being provided with a fuel refilling pipe (FP, RT, TN) and a membrane (D) disposed along said refilling pipe and provided with several through holes (H), in order to prevent the insertion of a rubber tube into the tank (T) for stealing the fuel stored therein without obstruct the refilling pipe, wherein said membrane has means for clinging to an inner sectional variation of the fuel refilling pipe (FP, RT, TN), by resting in position perpendicularly with the fuel refilling pipe axis at the point of the fuel refilling pipe in which the membrane is disposed, **characterized in that** said fuel refilling pipe (FP, RT, TN) comprises
- a first portion (FP), suitably to be fixed with a coach of said vehicle (V),
- a last portion (TN), fixed with the fuel tank (T),
- at least a rubber joint (RT) for joining one of said first or last portion between each other or with another further rigid fuel refilling pipe portion, and
wherein said sectional variation is defined by the coupling of said rubber joint (RT) and said rigid fuel refilling pipe portion.

2. The system according to claim 1, wherein said through holes (H) have a diameter of about 6 mm or less.

3. System according to any of the previous claims, wherein said membrane (D) defines substantially a goblet of cylindrical or truncated-conical hollow shape having one bottom (P) provided with said several through holes (H).

4. Terrestrial vehicle comprising a fuel tank (T) and an anti-theft system for fuel tanks (T), according to any of the previous claims from 1 to 3.

## Patentansprüche

1. Diebstahlsicherungssystem für Kraftstofftanks (T), insbesondere für Fahrzeuge (V) mit Verbrennungsmotor welcher Kraftstofftank (T) ausgestattet ist mit einer Kraftstoffnachfüllleitung (FP, RT, TN) und einer Membran (D), welche entlang der Nachfüllleitung angeordnet ist, und mit mehreren durchgehenden Löchern (H) versehen ist, um das Einführen eines Gummischlauches in den Kraftstofftank (T) zu verhindern, um den im Kraftstofftank gelagerten Kraftstoff zu stehlen, ohne dabei aber die Nachfüllleitung zu blockieren, wobei die Membran (D) Mittel zum Angreifen an einer inneren Querschnittsveränderung der Kraftstoffnachfüllleitung umfasst, indem sie an dem Punkt der Kraftstoffnachfüllleitung, an dem die Membran angeordnet ist, in einer Position senkrecht zur Achse der Kraftstoffnachfüllleitung bleibt, **gekennzeichnet dadurch, dass** die Kraftstoffnachfüllleitung (FP, RT, TN) folgendes umfasst:
- ein erstes Teil (FP), dazu geeignet, an der Karosserie des Fahrzeugs (V) fixiert zu werden,
- ein letztes Teil (TN), welches an dem Kraftstofftank (T) befestigt ist,
- mindestens eine Gummiverbindung (RT) zum Verbinden des ersten Teils (FP) oder des letzten Teils (TN) miteinander oder mit einem anderen, weiteren starren Teilstück der Kraftstoffnachfüllleitung, wobei die Querschnittsveränderung bestimmt ist durch die Kopplung der Gummiverbindung (RT) mit dem starren Teilstück der Kraftstoffnachfüllleitung.

2. System gemäß Anspruch 1, wobei die durchgehenden Löcher (H) einen Durchmesser von etwa 6 mm oder weniger haben.

3. System gemäß einem der vorhergehenden Ansprüche, wobei die Membran (D) im Wesentlichen einen Becher bildet, welcher eine zylindrische oder kegelstumpfförmige hohle Form besitzt mit einem Boden (P), der mit den mehreren durchgehenden Löchern (H) versehen ist.

4. Landfahrzeug, umfassend einen Kraftstofftank (T) und ein Diebstahlsicherungssystem für Kraftstofftanks (T) gemäß einem der vorhergehenden Ansprüche 1-3.

## Revendications

1. Système antivol pour réservoirs de carburant (T) de véhicules à moteur à combustion (V), le réservoir (T) étant pourvu d'un tuyau de réapprovisionnement en carburant (FP, RT, TN) et d'une membrane (D) disposée le long dudit tuyau de réapprovisionnement et pourvue de plusieurs trous débouchants (H), afin d'empêcher l'insertion d'un tube en caoutchouc dans le réservoir (T) pour voler le carburant stocké dans celui-ci sans obstruer le tuyau de réapprovisionnement, dans lequel ladite membrane possède des moyens pour se raccrocher à une variation de section intérieure du tuyau de réapprovisionnement en carburant (FP, RT, TN), en reposant en position perpendiculairement à l'axe de tuyau de réapprovisionnement en carburant au point du tuyau de réapprovisionnement en carburant dans lequel la membrane est disposée,
**caractérisé en ce que** ledit tuyau de réapprovisionnement en carburant (FP, RT, TN) comprend
- une première portion (FP), appropriée pour être fixée à une carrosserie dudit véhicule (V),
- une dernière portion (TN), fixée au réservoir de carburant (T),
- au moins un joint en caoutchouc (RT) pour joindre l'une de ladite première portion ou de ladite dernière portion l'une entre l'autre ou à une portion de tuyau de réapprovisionnement en carburant rigide supplémentaire, et
dans lequel ladite variation de section est définie par l'accouplement dudit joint en caoutchouc (RT) et de ladite portion de tuyau de réapprovisionnement en carburant rigide.

2. Système selon la revendication 1, dans lequel lesdits trous débouchants (H) présentent un diamètre d'environ 6 mm ou moins.

3. Système selon l'une quelconque des revendications précédentes, dans lequel ladite membrane (D) définit sensiblement un gobelet de forme cylindrique ou creuse tronconique possédant un fond (P) pourvu desdits plusieurs trous débouchants (H).

4. Véhicule terrestre comprenant un réservoir de carburant (T) et d'un système antivol pour réservoirs de carburant (T), selon l'une quelconque des revendications précédentes 1 à 3.
